# EUROPÄISCHE PATENTSCHRIFT

(11) **EP 0 478 722 B1**
(45) Veröffentlichungstag und Bekanntmachung des Hinweises auf die Patenterteilung: **29.05.1996**
(21) Anmeldenummer: 91905153.2
(22) Anmeldetag: 13.03.1991
(51) Int. Cl.: C08L 33/10, C08K 13/02, B44C 3/04

(54) **PLASTISCHE MASSE ZUM KNETEN, MODELLIEREN, BASTELN UND DEKORIEREN SOWIE VERFAHREN ZU DEREN HERSTELLUNG**
PLASTIC MATERIAL FOR KNEADING, MODELLING, DO-IT-YOURSELF AND DECORATING, AND A PROCESS FOR MANUFACTURING THE MATERIAL
MATERIAU PLASTIQUE A PETRIR, MODELER, POUR LE BRICOLAGE ET LA DECORATION, ET PROCEDE DE FABRICATION DUDIT MATERIAU

(30) Priorität: 21.03.1990 DE 4008980
(43) Veröffentlichungstag der Anmeldung: 08.04.1992
(73) Patentinhaber: J.S. STAEDTLER GmbH & Co, D-90427 Nürnberg (DE)
(72) Erfinder: SCHNORRER, Heinrich, D-8460 Schwandorf (DE); HANDL, Werner, D-8502 Altdorf (DE)
(86) Internationale Anmeldenummer: DE9100220
(87) Internationale Veröffentlichungsnummer: WO9114736

(56) Entgegenhaltungen:
- DE-A- 2 454 235
- DE-A- 3 238 232
- DATABASE WPIL, AN 88-081767 [12], Derwent Publications Ltd, (London, GB), & JP- A-63 035 507
- DATABASE WPIL, AN 82-48942E [24], Derwent Publications Ltd, (London, GB), & JP- A-57 073 038
- DATABASE WPIL, AN 90-159280 [21], Derwent Publications Ltd, (London, GB), & JP- A-2 099 983

## Beschreibung

Die Erfindung betrifft plastische Massen zum Kneten, Modellieren, Basteln und Dekorieren gemäß Hauptanspruch sowie Verfahren zu deren Herstellung.
Verwendet werden können diese Massen insbesondere zum Herstellen von Figuren und sonstigen plastischen Darstellungen, von Modellkörpern und Formen hierfür, von Schmuckstükken, Bildern und sonstigen kunstgewerblichen Gegenständen, als Aufnahmen für Blumen, Kerzen und sonstigen dekorativen Gegenständen sowie ggf. auch als therapeutische Knetmasse, beispielsweise für motorische Übungen mit den Händen.
Es handelt sich somit insbesondere um dauerplastische oder härtbare Modellier- und Bastelmassen, um Form- und Modell-baumassen, um Steckmassen für Blumen und sonstige dekorative Gegenstände sowie um Knetmassen schlechthin, für die unterschiedlichsten Anwendungsgebiete.

Eine derartige plastische Masse ist beispielsweise aus (1) DE PS 24 24 451 bekannt.
Diese i.d.R. von Hand verformbare, bei Raumtemperatur plastische und langzeitig dauerelastisch bleibende Masse ergibt keine Produkte, die langzeitig haltbar bzw. dauerhaft aushärtbar sind.

Demgegenüber kennt man aus (2) DE OS 25 15 757 und aus (3) DE PS 29 37 843 grundsätzlich gattungsgleiche plastische Massen, die Polyvinylchlorid (PVC) als Bindemittel enthalten und die bei erhöhter Temperatur, beispielsweise bei ca. 110 - 130°c, härtbare Produkte ergeben.
Von Nachteil ist bei diesen bekannten Massen, daß das ursprünglich i.d.R. als Plastisol vorliegende PVC thermisch relativ instabil ist und bei einer Erhitzung auf über 180°C bzw. bei einer Verbrennung, Chlorwasserstoff (HCl) abspaltet, wodurch sich Reizungen der Schleimhäute und Korrosion an Metallteilen ergeben können.
Darüber hinaus sind derartige Massen meist nicht langzeitig UV- und witterungsbeständig.

Aus der DE-A- 32 38 232 sind Modelliermassen auf Basis von Polyacrylsäureestern bekannt. Die JP-A-57 073 038 beschreibt Schwingungsdämpfungsmaterialien, die PMMA, Weichmacher und Füllstoffe enthalten.

Aus der DE-A-2 454 235 sind Plastisole bekannt, die PMMA, weichmacher und Füllstoffe enthalten und u, a, als Dichtungsmassen Verwendung finden.

Zahn überzugsmassen, die ein Pulver aus PEMA, weichmacher und Füllstoff enthalten, sind in der JP-A- 63 035 507 offenbart.

Aufgabe der vorliegenden Erfindung ist es daher, eine plastische Masse zum Kneten, Modellieren, Basteln und Dekorieren zu schaffen, die diese Nachteile nicht aufweist, die insbesondere einerseits bei Raumtemperatur dauerhaft plastisch bleibt und mit der zum anderen aber bedarfsweise härtbare Produkte mit erhöhter thermischer Stabilität und mit verminderter oder nicht vorhandener Reiz- oder Schadstoffemission bei unsachgemäßer Behandlung oder Verbrennung herstellbar sind.

Diese Aufgabe wird mit den kennzeichnenden Merkmalen des Anspruchs 1 auf einfache Weise gelöst.

Bevorzugte Ausführungen, Weiterbildungen und Herstellungsverfahren sind in den Unter- und Nebenansprüchen umfaßt.

Erfindungsgemäß soll die plastische Masse zum Kneten, Modellieren, Basteln und Dekorieren als Bindemittel Polyalkylmethacrylat (PAMA), insbesondere ein PAMA-Plastisol aus einem bestimmten Anteil einer oder mehrerer PAMA-Komponente(n) und aus Weichmacher, enthalten.

Anhand einiger Ausführungsbeispiele wird die Erfindung nachfolgend näher beschrieben.

### Rahmenbeispiel:

| | |
|---|---|
| 40-70 Gew.-% | Polyalkylmethacrylat (PAMA) |
| 10-30 Gew.-% | Weichmacher |
| 2-30 Gew.-% | Füllstoff |
| 0- 5 Gew.-% | Farbmittel |
| 0-10 Gew.-% | Gleitmittel und/oder sonstige Zusätze |

### Beispiel 1

| | |
|---|---|
| 65 Gew.-% | Polymethylmethacrylat (PMMA) |
| 25 Gew.-% | Di - (2-ethylhexyl)- phthalat (Weichmacher) |
| 6 Gew.-% | Calciumstearat (Gleitmittel) |
| 3,9 Gew.-% | amorphe Kieselsäure (Füllstoff) |
| 0,1 Gew.-% | Pigment (Farbmittel) |

### Beispiel 2:

| | |
|---|---|
| 52 Gew.-% | Polybutylmethacrylat (PBMA) |
| 20 Gew.-% | Di-n-(C₆-C₁₀)-alkylphthalat (Weichmacher) |
| 3,5 Gew.-% | Calciumstearat |
| 24 Gew.-% | Kaolin (Füllstoff) |
| 0,5 Gew.-% | Pigment |

### Beispiel 3:

| | |
|---|---|
| 70 Gew.-% | Polyethylmethacrylat (PEMA) |
| 20 Gew.-% | Diisononylphthalat (Weichmacher) |
| 9,9 Gew.-% | Methylmethacrylat/n-Butylmethacrylat - Copolymer |
| 0,1 Gew.-% | Pigment |

### Beispiel 4:

| | |
|---|---|
| 40 Gew.-% | Polypropylmethacrylat (PPMA) |
| 20 Gew.-% | Alkylsulfonsäureester(C₁₂-C₂₀) des Phenols (Weichmacher) |
| 3,5 Gew.-% | Calciumstearat (Gleitmittel) |
| 36 Gew.-% | Calciumcarbonat (Füllstoff) |
| 0,5 Gew.-% | Farbmittel (Pigment Oder Farbstoff) |

Die Herstellung erfindungsgemäßer plastischer Massen kann mit üblichen Vorrichtungen, insbesondere mit herkömmlichen Mischern, erfolgen, wobei vorteilhafterweise zunächst das PAMA-Plastisol hergestellt wird, in das dann die übrigen Komponenten, unter Berücksichtigung der gewünschten Konsistenz, eingemischt werden.

Alternativ hierzu kann aber auch zunächst eine Mischung aller trockenen Komponenten, also des PAMA-Pulvers, des Füllstoffes und ggf. weiterer fester Bestandteile, wie z.B. eines Gleitmittels und/oder der Pigmente hergestellt werden, der dann der Weichmacher unter inniger Vermischung, bis zur Erzielung einer homogenen plastischen Masse, zugegeben wird.

## Patentansprüche

1. Knet-, Modellier-, Bastel- oder Dekoriermasse, die bei Raumtemperatur plastisch und formbar ist und die aus Bindemittel, Weichmacher und Füllstoffen sowie gegebenenfalls Farbmitteln und/oder sonstigen Zusätzen besteht, **dadurch gekennzeichnet**, daß sie als Bindemittel 40 bis 70 Gew,-% Polyalkylmethacrylat (PAMA) enthält.

2. Masse nach Anspruch 1, **dadurch gekennzeichnet**, daß sie als Bindemittel ein Plastisol aus PAMA-Partikeln und Weichmacher enthält.

3. Plastische Masse nach Anspruch 1 oder 2, **dadurch gekennzeichnet** , daß das PAMA ein Polymethylmethacrylat (PMMA), ein Polyethylmethacrylat (PEMA), ein Polypropylmethacrylat (PPMA) und/oder ein Polybutylmethacrylat (PBMA) ist.

4. Plastische Masse nach Anspruch 1 oder 2, **dadurch gekennzeichnet**, daß das PAMA ein Copolymer ist.

5. Plastische Masse nach Anspruch 4, **dadurch gekennzeichnet**, daß das PAMA ein Methylmethacrylat/n-Butylmethacrylat-Copolymerisat ist.

6. Plastische Masse nach einem der vorhergehenden Ansprüche, **dadurch gekennzeichnet**, daß der Weichmacher ein Di-(2-ethylhexyl)-phthalat und/oder ein Di-n-(C₆-C₁₀)-alkylphthalat ist.

7. Plastische Masse nach einem der Ansprüche 1 bis 5, **dadurch gekennzeichnet** , daß der Weichmacher ein Diisononylphthalat und/oder ein Alkylsulfonsäureester(C₁₂-C₂₀) des Phenols ist.

8. Plastische Masse nach einem der vorhergehenden Ansprüche, **dadurch gekennzeichnet** , daß sie als Füllstoff Calciumcarbonat, amorphe Kieselsäure und/oder Kaolin enthält.

9. Plastische Masse nach einem der vorhergehenden Ansprüche,
**dadurch gekennzeichnet**,
daß sie
a) 40 - 70 Gew.-% Polyalkylmethacrylat, insbesondere Polymethylmethacrylat und/oder Polybutylmethacrylat, b) 10 - 30 Gew.-% Weichmacher, c) 2 - 30 Gew.-% Füllstoff, d) 0 - 5 Gew.-% Farbmittel, insbesondere Pigmente, e) 0 - 10 Gwe.-% Gleitmittel und/oder sonstige Zusätze enthält.

10. Plastische Masse nach Anspruch 9, **dadurch gekennzeichnet**, daß sie 50 - 65 Gew.-% Polymethylmethacrylat, Polyethylmethacrylat, Polypropylmethacrylat und/oder Polybutylmethacrylat enthält.

11. Verfahren zur Herstellung einer plastischen Masse gemäß einem der vorhergehenden Ansprüche, **dadurch gekennzeichnet**, daß zunächst ein Plastisol aus feinkörnigem Polyalkylmethacrylat und Weichmacher gebildet wird und daß diesem Plastisol dann die Füllstoffe sowie ggf. Gleitmittel, Farbmittel und/oder sonstige Zusätze beigemischt werden.

12. Verfahren zur Herstellung einer plastischen Masse nach einem der Ansprüche 1 bis 10, **dadurch gekennzeichnet**, daß zunächst das PAMA-Pulver, der Füllstoff sowie die ggf. weiteren trockenen Komponenten wie Gleitmittel, Pigmente usw. trocken innig vermischt werden und daß dieser Mischung dann der flüssige Weichmacher zugesetzt und eingemischt bzw. eingeknetet wird.

## Claims

1. Kneading, modelling, handicraft decorating mass which is plastic and mouldable at room temperature and which consists of binder, softener and fillers as well as optionally also colourants and/or other additives, characterised thereby that as binder it contains 40 to 70 weight percent of polyalkylmethacrylate (PAMA).

2. Mass according to claim 1, characterised thereby that as binder it contains a plastisol of PAMA particles and softener.

3. Plastic mass according to claim 1 or 2, characterised thereby that the PAMA is a polymethylmethacrylate (PMMA), a polyethylmethacrylate (PEMA), a polypropylmethacrylate (PPMA) and/or a polybutylmethacrylate (PBMA).

4. Plastic mass according to claim 1 or 2, characterised thereby that the PAMA is a copolymer.

5. Plastic mass according to claim 4, characterised thereby that the PAMA is a methylmethacrylate/n-butylmethacrylate copolymerisate.

6. Plastic mass according to one of the preceding claims, characterised thereby that the softener is a di-(2-ethylhexyl)-phthalate and/or a di-n-(C₆-C₁₀)-alkylphthalate.

7. Plastic mass according to one of claims 1 to 5, characterised thereby that the softener is a diisononylphthalate and/or an alkylsulfonic acid ester (C₁₂-C₂₀) of the phenol,

8. Plastic mass according to one of the preceding claims, characterised thereby that as filler it contains calcium carbonate, amorphous silicic acid and/or kaolin.

9. Plastic mass according to one of the preceding claims, characterised thereby that it contains
a) 40 to 70 weight percent of polyalkylmethacrylate, especially polymethylmethacrylate and/or polybutylmethacrylate,
b) 10 to 30 weight percent of softener,
c) 2 to 30 weight percent of filler,
d) 0 to 5 weight percent of colourant, especially pigments,
e) 0 to 10 weight percent of lubricant or other additives.

10. Plastic mass according to claim 9, characterised thereby that it contains 50 to 65 weight percent of polymethylmethacrylate, polyethylmethacrylate, polypropylmethacrylate and/or polybutylmethacrylate.

11. Method of manufacturing a plastic mass according to one of the proceding claims, characterised thereby that initially a plastisol of finely particulate polyalkylmethacrylate and softener is formed and that then the fillers as well as optionally lubricants, colourants and/or other additives are admixed to this plastisol.

12. Method of manufacturing a plastic mass according to one of claims 1 to 10, characterised thereby that initially the PAMA powder, the filler as well as the optional further dry components such as lubricants, pigments, etc., are dry mixed intimately and that the required softener is then added to and mixed or kneaded into this mixture.

## Revendications

1. Matériau (masse ou composition) à pétrir, à modeler, pour le bricolage et pour la décoration, qui est plastique et formable à la température ambiante et qui consiste en du liant, du plastifiant et des charges ainsi qu'éventuellement en des colorants et/ou d'autres additifs, matériau caractérisé en ce qu'il contient comme liant 40 à 70 % en poids de poly(méthacrylate d'alkyle) (PAMA).

2. Matériau selon la revendication 1, caractérisé en ce qu'il contient comme liant un plastisol formé de particules de PAMA et d'un plastifiant.

3. Matériau plastique selon la revendication 1 ou 2, caractérisé en ce que le PAMA est un poly(méthacrylate de méthyle) (PMMA), un poly(méthacrylate d'éthyle) (PEMA), un poly(méthacrylate de propyle) (PPMA) et/ou un poly(méthacrylate de butyle) (PBMA).

4. Matériau plastique selon la revendication 1 ou 2, caractérisé en ce que le PAMA est un copolymère.

5. Matériau plastique selon la revendication 4, caractérisé en ce que le PAMA est un copolymère de méthacrylate de méthyle/méthacrylate de n-butyle.

6. Matériau plastique selon l'une des revendications précédentes, caractérisé en ce que le plastifiant est un phtalate de di-(2-éthylhexyle) et/ou un phtalate de di-n-(alkyle en C₆ à C₁₀).

7. Matériau plastique selon l'une des revendications 1 à 5, caractérisé en ce que le plastifiant est un phtalate de diisononyle et/ou un ester d'acide alkyl sulfonique (en C₁₂ à C₂₀) du phénol.

8. Matériau plastique selon l'une des revendications précédentes caractérisé en ce qu'il contient comme charge du carbonate de calcium, de l'acide silicique (ou silice) amorphe et/ou du kaolin.

9. Matériau plastique selon l'une des revendications précédentes, caractérisé en ce qu'il contient: a) 40 à 70 % en poids de poly(méthacrylate d'alkyle), notamment de poly(méthacrylate de méthyle) et/ou de poly (méthacrylate de butyle),
b) 10 à 30 % en poids d'un plastifiant,
c) 2 à 30 % en poids d'une charge,
d) 0 à 5 % en poids d'un colorant, notamment des pigments,
e) 0 à 10 % en poids d'un lubrifiant et/ou d'autres additifs.

10. Matériau plastique selon la revendication 9, caractérisé en ce qu'il contient 50 à 65 % en poids de poly(méthacrylate de méthyle), de poly(méthacrylate d'éthyle), de poly(méthacrylate de propyle) et/ou de poly(méthacrylate de butyle).

11. Procédé pour préparer un matériau plastique selon l'une des revendications précédentes, procédé caractérisé en ce qu'on forme tout d'abord un plastisol obtenu à partir de poly(méthacrylate d'alkyle) en grains fins et d'un plastifiant et l'on incorpore ensuite à ce plastisol les charges ainsi qu'éventuellement du lubrifiant, du colorant et/ou d'autres additifs.

12. Procédé pour préparer un matériau plastique selon l'une des revendications 1 à 10, caractérisé en ce qu'on mélange intimement à sec tout d'abord la poudre de PAMA, la charge ainsi qu'éventuellement d'autres constituants secs comme du lubrifiant, des pigments, etc., et en ce qu'on ajoute ensuite à ce mélange le plastifiant liquide que l'on y incorpore par mélangeage ou malaxage.
